# EUROPÄISCHE PATENTSCHRIFT

(11) **EP 1 640 635 B1**
(45) Veröffentlichungstag und Bekanntmachung des Hinweises auf die Patenterteilung: **25.03.2009**
(21) Anmeldenummer: 05020200.1
(22) Anmeldetag: 16.09.2005
(51) Int. Cl.: F16F 15/26

(54) **Ausgleichswelle für eine Brennkraftmaschine**
Balancing shaft for an internal combustion engine
Arbre d'équilibrage pour un moteur à combustion interne

(30) Priorität: 27.09.2004 DE 102004047223
(43) Veröffentlichungstag der Anmeldung: 29.03.2006
(73) Patentinhaber: LuK Lamellen und Kupplungsbau Beteiligungs KG, 77815 Bühl (DE)
(72) Erfinder: Lehmann, Steffen, 76275 Ettlingen (DE); Sieber, Dimitri, 76275 Ettlingen (DE)
(74) Vertreter: Duschl, Edgar Johannes

(56) Entgegenhaltungen:
- WO-A-20/04044452
- DE-A1- 10 058 885
- DE-A1- 19 928 470
- PATENT ABSTRACTS OF JAPAN Bd. 2000, Nr. 13, 5. Februar 2001 (2001-02-05) & JP 2000 283238 A (SUZUKI MOTOR CORP), 13. Oktober 2000 (2000-10-13)

## Beschreibung

Die Erfindung betrifft eine Ausgleichswelle für eine Brennkraftmaschine, mit mindestens einem Unwuchtgewicht und einer Drehschwingungsdämpfungseinrichtung.

Aus der deutschen Offenlegungsschrift DE 100 58 885 A1 ist eine Brennkraftmaschine mit wenigstens einer von der Kurbelwelle angetriebenen Ausgleichswelle bekannt, bei der im Drehmomentübertragungsweg zwischen der Kurbelwelle und der Ausgleichwelle ein Drehschwingungsdämpfer mit wenigstens einem Eingangsteil und einem Ausgangsteil vorgesehen ist, die entgegen von zwischen diesen vorgesehenen das Antriebsmoment auf die Ausgleichswelle übertragenden Dämpfungsmitteln begrenzt verdrehbar sind. Bei der bekannten Brennkraftmaschine ist der Drehschwingungsdämpfer in ein an der Ausgleichswelle befestigtes, angetriebenes Rad integriert.

Aufgabe der Erfindung ist es, eine bezüglich Ihres Einbauraums optimierte Ausgleichswelle für eine Brennkraftmaschine mit mindestens einem Unwuchtgewicht und einer Drehschwingungsdämpfungseinrichtung zu schaffen.

Die Aufgabe ist bei einer Ausgleichswelle für eine Brennkraftmaschine, mit mindestens einem Unwuchtgewicht und einer Drehschwingungsdämpfungseinrichtung mit Energiespeichern, dadurch gelöst, dass das Unwuchtgewicht an einem Ende der Ausgleichwelle befestigt ist und die Drehschwingungsdämpfungseinrichtung nicht rotationssymmetrisch, sondern asymmetrisch so ausgebildet ist, dass der Schwerpunkt der Drehschwingungsdämpfungseinrichtung radial in Richtung der Unwucht des Unwuchtgewichtes verlagert und axial in das Unwuchtgewicht integriert ist. Dadurch wird erreicht, dass die Drehschwingungsdämpfungseinrichtung zumindest einen Teil der Funktion des Unwuchtgewichts übernimmt. Bei gleich bleibender Unwucht wurde die Drehschwingungseinrichtung Platz sparend integriert. Das hat den Vorteil, dass für die Drehschwingungsdämpfungseinrichtung kein zusätzlicher Bauraum benötigt wird.

Ein weiteres bevorzugtes Ausführungsbeispiel der Ausgleichswelle ist dadurch gekennzeichnet, dass sich die Drehschwingungsdämpfungseinrichtung, bezogen auf die Drehachse der Ausgleichswelle, im Wesentlichen über den gleichen Kreissektor wie das Unwuchtgewicht erstreckt. Dadurch wird erreicht, dass die Fliehkraft der Drehschwingungsdämpfungseinrichtung in der gleichen Richtung wirkt, wie die Fliehkraft des Unwuchtgewichts.

Ein weiteres bevorzugtes Ausführungsbeispiel der Ausgleichswelle ist dadurch gekennzeichnet, dass das Unwuchtgewicht einen Lagerstummel aufweist, der drehfest mit der Ausgleichswelle verbunden ist. Die drehfeste Verbindung kann zum Beispiel durch Reibschluss und Mitnehmerstifte erreicht werden und stellt sicher, dass ein Drehmoment von dem Unwuchtgewicht auf die Ausgleichswelle übertragen werden kann.

Ein weiteres bevorzugtes Ausführungsbeispiel der Ausgleichswelle ist dadurch gekennzeichnet, dass auf dem Lagerstummel ein Drehmomentübertragungsmittel, insbesondere ein Antriebszahnrad, drehbar gelagert ist. Das Drehmomentübertragungsmittel ist, zum Beispiel über eine Kette oder einen Zahnriemen, mit der Kurbelwelle der Brennkraftmaschine verbunden.

Ein weiteres bevorzugtes Ausführungsbeispiel der Ausgleichswelle ist dadurch gekennzeichnet, dass das Drehmomentübertragungsmittel drehfest mit einem Flansch verbunden ist. Die drehfeste Verbindung wird zum Beispiel über eine an dem Drehmomentübertragungsmittel vorgesehene Außenverzahnung ermöglicht, die mit einer komplementär ausgebildeten Innenverzahnung zusammenwirkt, die an dem Flansch ausgebildet ist. Der Flansch bildet das Eingangsteil der Drehschwingungsdämpfungseinrichtung.

Ein weiteres bevorzugtes Ausführungsbeispiel der Ausgleichswelle ist dadurch gekennzeichnet, dass der Flansch Aufnahmefenster für Energiespeicher aufweist. Die Aufnahmefenster weisen Anschläge für die Energiespeicher auf. Bei den Energiespeichern handelt es sich vorzugsweise um bogenförmige Schraubendruckfedern, die auch als Bogenfedern bezeichnet werden. Die Bogenfedern sind vorzugsweise aus Federstahl gebildet. Es können aber auch Energiespeicher aus Gummi verwendet werden. Die Energiespeicher definieren die Federsteifigkeit der Drehschwingungsdämpfungseinrichtung.

Ein weiteres bevorzugtes Ausführungsbeispiel der Ausgleichswelle ist dadurch gekennzeichnet, dass der Flansch, bezogen auf die Ausgleichswelle, in axialer Richtung zwischen dem Unwuchtgewicht und einer Gegenscheibe angeordnet ist, die mit Hilfe von Abstandsbolzen an dem Unwuchtgewicht befestigt ist. Die Gegenscheibe begrenzt die Drehschwingungsdämpfungseinrichtung in axialer Richtung und kann Axialkräfte aufnehmen. Die Abstandsbolzen dienen darüber hinaus als Überlastanschläge, gegen die der Flansch bei Resonanzdurchgängen anschlagen kann. Die Abstandsbolzen verhindern so, dass die Energiespeicher auf Block gehen.

Ein weiteres bevorzugtes Ausführungsbeispiel der Ausgleichswelle ist dadurch gekennzeichnet, dass zwischen dem Unwuchtgewicht und dem Flansch eine Zwischenscheibe angeordnet ist, die Aufnahmekanäle für die Energiespeicher aufweist. Vorzugsweise sind die Aufnahmefenster in dem Flansch und die Aufnahmekanäle in der Zwischenscheibe, bezogen auf die Ausgleichswelle, in axialer Richtung fluchtend angeordnet. Die Aufnahmekanäle dienen der Führung der Energiespeicher und nehmen vorzugsweise sowohl radial als auch tangential Kräfte auf. Vorzugsweise ist die Zwischenscheibe formschlüssig mit den Abstandsbolzen verbunden. Durch den Formschluss wird gewährleistet, dass die Zwischenscheibe zwar drehfest mit dem Unwuchtgewicht verbunden, aber in axialer Richtung relativ zu diesem bewegbar ist. Die Zwischenscheibe kann als Reibscheibe auch Dämpfungsaufgaben übernehmen.

Ein weiteres bevorzugtes Ausführungsbeispiel der Ausgleichswelle ist dadurch gekennzeichnet, dass zwischen dem Unwuchtgewicht und der Zwischenscheibe eine Federscheibe angeordnet ist. Vorzugsweise ist die Zwischenscheibe über die Abstandsbolzen formschlüssig mit der Federscheibe verbunden. Dadurch können Kräfte von den Aufnahmekanälen in der Zwischenscheibe auf die Abstandsbolzen übertragen werden. Vorzugsweise ist die Federscheibe durch die Abstandsbolzen an dem Unwuchtgewicht befestigt und so vorgespannt, dass eine Axialkraft von der Federscheibe auf die Zwischenscheibe aufgebracht wird.

Ein weiteres bevorzugtes Ausführungsbeispiel der Ausgleichswelle ist dadurch gekennzeichnet, dass sich die Federscheibe, der Flansch, die Zwischenscheibe und die Gegenscheibe, bezogen auf die Drehachse der Ausgleichswelle, im Wesentlichen über den gleichen Kreissektor wie das Unwuchtgewicht erstrecken. Der Kreissektor erstreckt sich vorzugsweise über einen Winkelbereich von etwa 180°.

Bei einer Brennkraftmaschine mit mindestens einer von einer Kurbelwelle angetriebenen Ausgleichswelle ist die oben angegebene Aufgabe durch den Einbau einer vorab beschriebenen Ausgleichswelle gelöst.

Weitere Vorteile, Merkmale und Einzelheiten der Erfindung ergeben sich aus der nachfolgenden Beschreibung, in der unter Bezugnahme auf die Zeichnung ein Ausführungsbeispiel im Einzelnen beschrieben ist. . Es zeigen:
- Figur 1: eine perspektivische Darstellung eines Ausschnitts einer Brennkraftmaschine;
- Figur 2: einen Längsschnitt durch ein Ende einer Ausgleichswelle mit einer in ein Unwuchtgewicht integrierten Drehschwingungsdämpfungseinrichtung gemäß der vorliegenden Erfindung;
- Figur 3: das Unwuchtgewicht aus Figur 2 mit einem darauf gelagerten Ausgleichswellenritzel;
- Figur 4: die Ansicht eines Schnitts entlang der Linie IV-IV in Figur 3;
- Figur 5: die Darstellung eines vergrößerten Ausschnitts aus Figur 3 und
- Figur 6: eine Explosionsdarstellung der erfindungsgemäßen Drehschwingungsdämpfungseinrichtung.

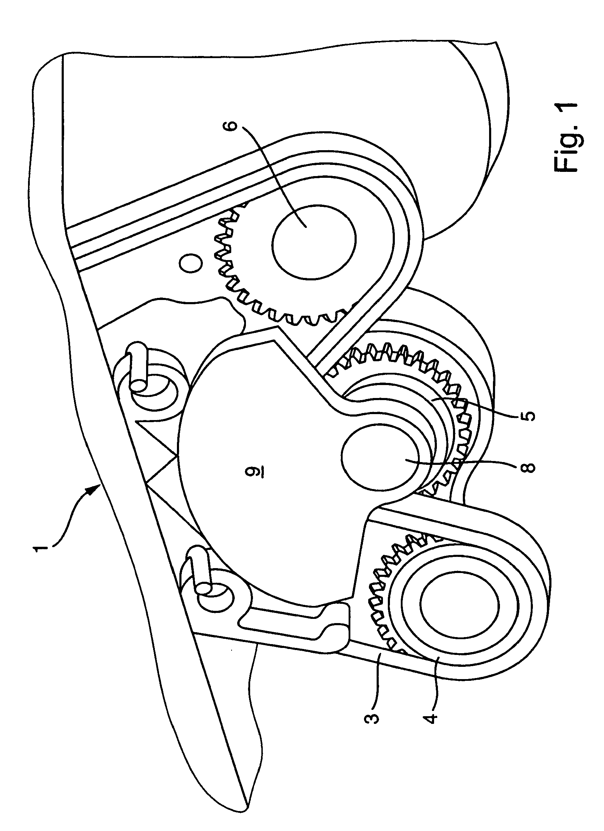

In Figur 1 ist ein Ausschnitt einer Brennkraftmaschine 1 perspektivisch dargestellt. Die Brennkraftmaschine umfasst eine Kurbelwelle, durch die die Kraft einer Pleuelstange in ein Drehmoment umgewandelt wird. Das Drehmoment wird von der Kurbelwelle über eine Antriebskette 3 und ein Umlenkritzel 4 auf ein Ausgleichswellenritzel 5 und ein Ölpumpenritzel 6 übertragen.

Ausgleichswellen in Brennkraftmaschinen dienen dazu, freie Massenkräfte bzw. Massenmomente, insbesondere der ersten und/oder der zweiten Ordnung, zu kompensieren. Derartige freie Massenkräfte/-momente treten insbesondere bei Hubkolbenmotoren auf. Die Antriebsverbindung zwischen der Kurbelwelle der Brennkraftmaschine und den Ausgleichswellen erfolgt entweder unmittelbar über Zahnräder oder aber über ein endloses Antriebsmittel, wie zum Beispiel eine Kette oder einen Riemen, insbesondere einen Zahnriemen. Bei Antriebssystemen mit Endloskette beziehungsweise Endlosriemen wird an der Kurbelwelle ein von dieser angetriebenes Rad vorgesehen, welches über die Endloskette beziehungsweise den Endlosriemen mit einem an der entsprechenden Ausgleichswelle vorgesehenen angetriebenen Rad, das auch als Ausgleichswellenritzel bezeichnet wird, in Verbindung steht. Vorzugsweise sind diese Räder an einem Ende der entsprechenden Welle angeordnet.

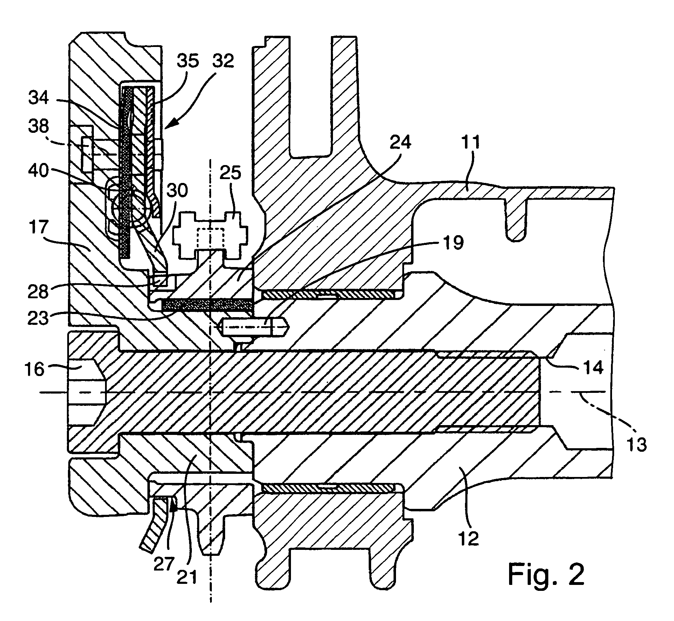

In Figur 2 ist ein Gehäuseteil 11 einer Brennkraftmaschine schematisch dargestellt, in dem ein Ende einer Ausgleichswelle 12 um eine Drehachse 13 drehbar gelagert ist. Die Ausgleichswelle 12 weist an ihrem Ende eine zentrale Gewindebohrung 14 auf, in die eine Schraube 16 eingeschraubt ist. Die Schraube 16 dient dazu, ein Unwuchtgewicht 17 am Ende der Ausgleichswelle 12 zu befestigten. Das Unwuchtgewicht 17 ist durch mindestens einen Mitnehmerstift 19 drehfest mit der Ausgleichswelle 12 verbunden.

Das Unwuchtgewicht 17 hat im Wesentlichen die Gestalt einer Halbkreisscheibe, von der ein Lagerstummel 21 ausgeht, der im Wesentlichen die Gestalt eines Kreiszylindermantels aufweist. Auf dem Lagerstummel 21 ist mit Hilfe einer Gleichlagerbuchse 23 ein Ausgleichswellenritzel 24 drehbar gelagert. Das Ausgleichswellenritzel 24 ist zur Drehmomentübertragung über eine Antriebskette 25 mit einer (nicht dargestellten) Kurbelwelle einer Brennkraftmaschine gekoppelt.

Das Ausgleichwellenritzel 24 stützt sich in axialer Richtung an dem Gehäuseteil 11 ab. Auf der dem Gehäuseteil 11 abgewandten Seite weist das Ausgleichswellenritzel 24 eine Außenverzahnung 27 auf, in die eine Innenverzahnung 28 eines Flansches 30 eingreift, der sich von dem Ausgleichswellenritzei 24 radial nach außen erstreckt. Über die Verzahnungen 27, 28 wird eine drehfeste Verbindung zwischen dem Ausgleichswellenritzel 27 und dem Flansch 30 geschaffen. Der Flansch 30 stellt das Eingangsteil einer Drehschwingungsdämpfungseinrichtung 32 dar, die in das Unwuchtgewicht 17 integriert ist. In axialer Richtung zwischen dem Flansch 30 und dem Unwuchtgewicht 17 ist eine Zwischenscheibe 34 angeordnet. Die Zwischenscheibe 34 ist durch Abstandsbolzen 38 drehfest mit einer Gegenscheibe 35 verbunden. Die Gegenscheibe 35 ist durch die Abstandsbolzen 38 an dem Unwuchtgewicht 17 befestigt. Die Zwischenscheibe 34 und die Gegenscheibe 35 stellen das Ausgangsteil der Drehschwingungsdämpfungseinrichtung 32 dar. Zwischen dem Eingangsteil und dem Ausgangsteil der Drehschwingungsdämpfungseinrichtung 32 sind Energiespeicher 40 wirksam, die dazu dienen, im Betrieb der Brennkraftmaschine auftretende Drehschwingungen zu dämpfen.

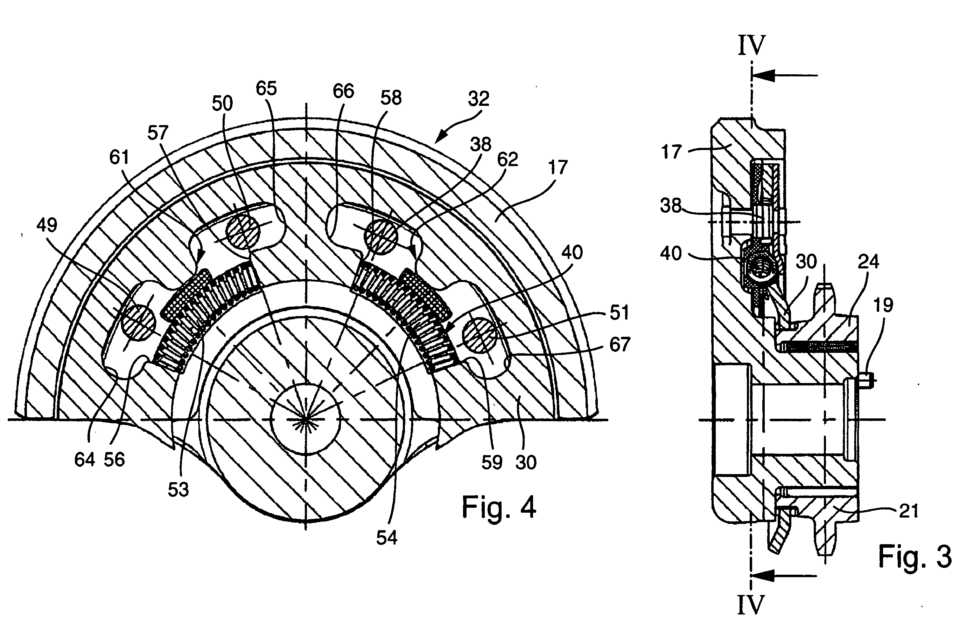

In den Figuren 3 und 4 sieht man, dass das Unwuchtgewicht 17 und der Flansch 30 sich über einen Kreissektor mit einer Winkelausdehnung von 180° erstrecken. In Figur 4 sieht man, dass der Drehschwingungsdämpfer 32 vier Abstandsbolzen 38, 49, 50, 51 und zwei Bogenfedern 53, 54 aufweisen, welche die Energiespeichereinrichtung 40 bilden. Die beiden Bogenfedern 53, 54 sind jeweils zwischen zwei Anschlägen 56, 57 und 58, 59 eingespannt, die in Aufnahmefenstern 61, 62 vorgesehen sind, die den Flansch 30 in axialer Richtung durchbrechen. Die Aufnahmefenster 61, 62 umfassen radial außerhalb der Anschläge 56 bis 59 Langlöcher 64, 65, 66 und 67, durch die sich jeweils einer der Abstandsbolzen 38, 49, 50, 51 erstreckt. Die Langlöcher 64bis 67 dienen dazu, den Verdrehweg des Flansches 30 relativ zu den Abstandsbolzen 38, 49 bis 51 zu begrenzen und umgekehrt.

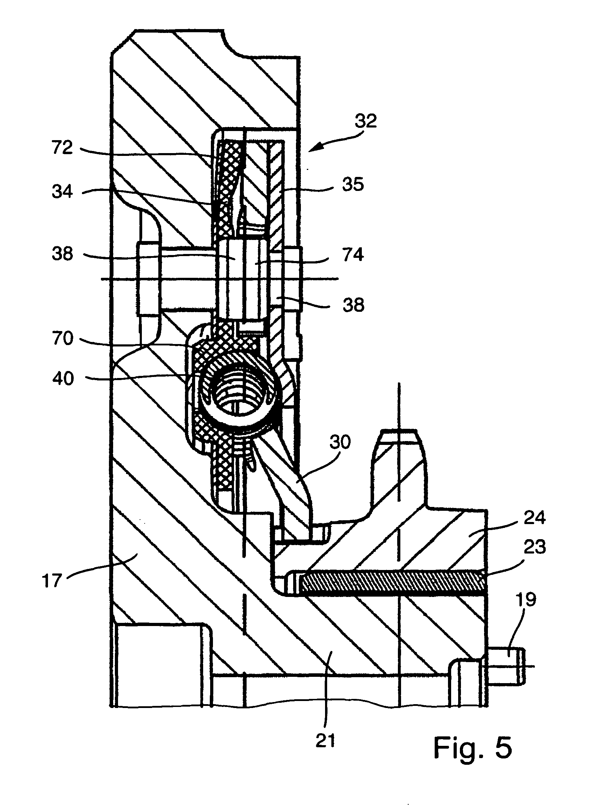

In Figur 5 ist ein vergrößerter Ausschnitt aus Figur 3 dargestellt. In Figur 5 sieht man, dass radial innen in der Zwischenscheibe 34 Aufnahmekanäle 70 für die Energiespeicher ausgebildet sind. In axialer Richtung zwischen der Zwischenscheibe 34 und dem Unwuchtgewicht 17 ist eine Federscheibe 72 angeordnet. Die Federscheibe 72 ist durch einen Bund 74, der an dem Abstandsbolzen 38 ausgebildet ist, an dem Unwuchtgewicht 17 befestigt. Zu diesem Zweck ist das zugehörige Ende des Abstandsbolzens 38 mit dem Unwuchtgewicht 17 vernietet. Das andere Ende des Abstandsbolzens 38 ist mit der Gegenscheibe 35 vernietet. Durch den Bund 74 wird die Gegenscheibe 35 von dem Unwuchtgewicht 17 in axialer Richtung beabstandet.

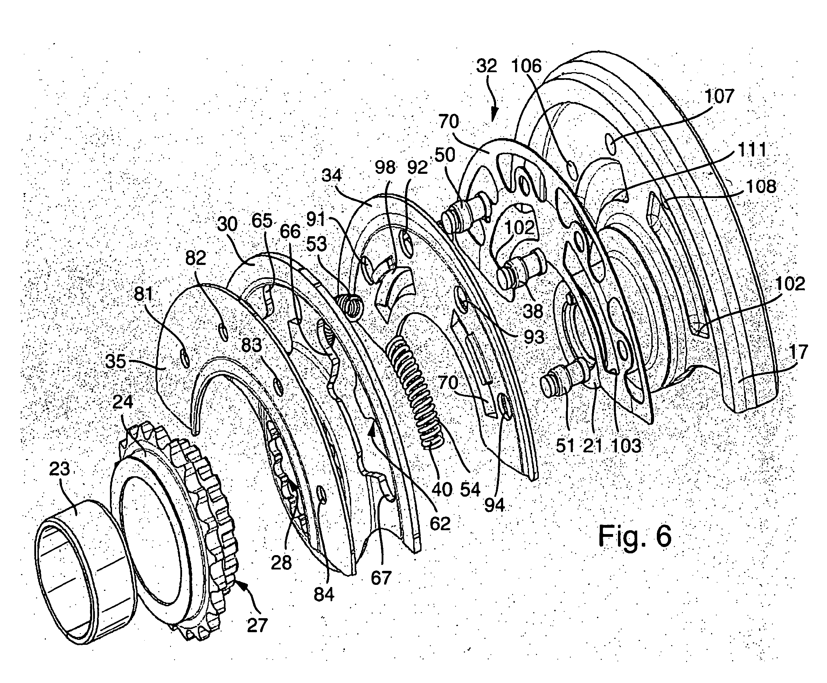

In Figur 6 ist eine Explosionsdarstellung der erfindungsgemäßen Drehschwingungsdämpfungseinrichtung 32 dargestellt. Von links nach rechts sind die folgenden Einzelteile dargestellt. Die Gleitlagerbuchse 23 hat im Wesentlichen die Gestalt eines Kreiszylinders. Das Ausgleichswellenritzel 24 ist zusätzlich zu der üblichen Außenverzahnung mit der Außenverzahnung 27 ausgestattet, die in die Innenverzahnung 28 eingreift, die an dem Flansch 30 ausgebildet ist. Die Innenverzahnung 28 an dem Flansch 30 erstreckt sich über den gesamten Kreisumfang und nicht nur über einen Kreissektor wie die übrigen Teile der Drehschwingungsdämpfungseinrichtung 32.

In Figur 6 sieht man, dass in der Gegenscheibe 35 vier Durchgangslöcher 81 bis 84 ausgespart sind, die zur Befestigung, insbesondere Vernietung, der Abstandsbolzen dienen. Fluchtend mit den Durchgangslöchern 81 bis 84 sind in der Zwischenscheibe 34 vier Durchgangslöcher 91 bis 94 ausgespart, die einen etwas größeren Durchmesser als die Durchgangslöcher 81 bis 84 aufweisen. Die Durchgangslöcher 91 bis 94 in der Zwischenscheibe 34 dienen zum Durchführen der Abstandsbolzen 38, 49, 50, 51. In der Zwischenscheibe 34 ist neben dem Aufnahmekanal 70 für die Bogenfeder 54 ein weiterer Aufnahmekanal 98 für die Bogenfeder 53 vorgesehen. Fluchtend mit den Aufnahmekanälen 70, 98 sind in der Federscheibe 72 Aufnahmefenster 102, 103 vorgesehen, die wiederum mit Aufnahmevertiefungen 111, 112 in dem Unwuchtgewicht 17 fluchten. Die Aufnahmekanäle 70, 98, die Aufnahmefenster 102, 103 und die Aufnahmevertiefungen 111, 112 dienen dazu, jeweils einen Teil der Bogenfedern 53, 54 aufzunehmen. Radial außerhalb der Aufnahmevertiefungen 111, 112 sind in dem Unwuchtgewicht 17 Bohrungen 106 bis 108 ausgebildet, die zur Vernietung der Abstandsbolzen 38, 49 bis 51 dienen.

### Bezuaszeichenliste

- 1.: Brennkraftmaschine
- 2.: -
- 3.: Antriebskette
- 4.: Umlenkritzel
- 5.: Ausgleichswellenritzel
- 6.: Ölpumpenritzel
- 7.: -
- 8.: -
- 9.: -
- 10.: -
- 11.: Gehäuseteil
- 12.: Ausgleichswelle
- 13.: Drehachse
- 14.: zentrale Gewindebohrung
- 15.: -
- 16.: Schraube
- 17.: Unwuchtgewicht
- 18.: -
- 19.: Mitnehmerstift
- 20.: -
- 21.: Lagerstummel
- 22.: -
- 23.: Gleitlagerbuchse
- 24.: Ausgleichswellenritzel
- 25.: Antriebskette
- 26.: -
- 27.: Außenverzahnung
- 28.: Innenverzahnung
- 29.: -
- 30.: Flansch => Eingangsteil
- 31.: -
- 32.: Drehschwingungsdämpfer in 17 integriert
- 33.: -
- 34.: Zwischenscheibe => Ausgangsteil
- 35.: Gegenscheibe => Ausgangsteil
- 36.: -
- 37.: -
- 38.: Abstandsbolzen
- 39.: -
- 40.: Energiespeicher
- 41.: -
- 42.: -
- 43.: -
- 44.: -
- 45.: -
- 46.: -
- 47.: -
- 48.: -
- 49.: Abstandsbolzen
- 50.: Abstandsbolzen
- 51.: Abstandsbolzen
- 52.: -
- 53.: Bogenfeder
- 54.: Bogenfeder
- 55.: -
- 56.: Anschlag
- 57.: Anschlag
- 58.: Anschlag
- 59.: Anschlag
- 60.: -
- 61.: Aufnahmefenster
- 62.: Aufnahmefenster
- 63.: -
- 64.: Langloch
- 65.: Langloch
- 66.: Langloch
- 67.: Langloch
- 68.: -
- 69.: -
- 70.: Aufnahmekanäle
- 71.: -
- 72.: Federscheibe
- 73.: -
- 74.: Bund
- 75.: -
- 76.: -
- 77.: -
- 78.: -
- 79.: -
- 80.: -
- 81.: Durchgangsloch
- 82.: Durchgangsloch
- 83.: Durchgangsloch
- 84.: Durchgangsloch
- 85.: -
- 86.: -
- 87.: -
- 88.: -
- 89.: -
- 90.: -
- 91.: Durchgangsloch
- 92.: Durchgangsloch
- 93.: Durchgangsloch
- 94.: Durchgangsloch
- 95.: -
- 96.: -
- 97.: -
- 98.: Aufnahmekanal
- 99.: -
- 100.: -
- 101.: -
- 102.: Aufnahmefenster
- 103.: Aufnahmefenster
- 104.: -
- 105.: -
- 106.: Bohrungen
- 107.: Bohrungen
- 108.: Bohrungen
- 109.: -
- 110.: -
- 111.: Aufnahmevertiefung
- 112.: Aufnahmevertiefung

## Patentansprüche

1. Ausgleichswelle für eine Brennkraftmaschine, mit mindestens einem Unwuchtgewicht (17) und einer Drehschwingungsdämpfungseinrichtung (32) mit Energiespeichern (40), **dadurch gekennzeichnet, dass** das Unwuchtgewicht an einem Ende der Ausgleichwelle vorgesehen ist und die Drehschwingungsdämpfungseinrichtung (32) nicht rotationssymmetrisch, sondern asymmetrisch so ausgebildet ist, dass der Schwerpunkt der Drehschwingungsdämpfungseinrichtung (32) radial in Richtung der Unwucht des Umwuchtgewichts (17) verlagert ist und dass die Drehschwingungsdämpfungseinrichtung in das Unwuchtgewicht (17) axial integriert ist.

2. Ausgleichswelle nach Anspruch 1, **dadurch gekennzeichnet, dass** sich die Drehschwingungsdämpfungseinrichtung (32), bezogen auf die Drehachse (13) der Ausgleichwelle (12), im Wesentlichen über den gleichen Kreissektor wie das Unwuchtgewicht (17) erstreckt.

3. Ausgleichswelle nach einem der vorhergehenden Ansprüche, **dadurch gekennzeichnet, dass** das Unwuchtgewicht (17) einen Lagerstummel (21) aufweist, der drehfest mit der Ausgleichswelle (12) verbunden ist.

4. Ausgleichswelle nach Anspruch 3, **dadurch gekennzeichnet, dass** auf dem Lagerstummel (21) ein Drehmomentübertragungsmittel (24), insbesondere ein Antriebszahnrad, drehbar gelagert ist.

5. Ausgleichswelle nach Anspruch 4, **dadurch gekennzeichnet, dass** das Drehmomentübertragungsmittel (24) drehfest mit einem Flansch (30) verbunden ist.

6. Ausgleichswelle nach Anspruch 5, **dadurch gekennzeichnet, dass** der Flansch (30) Aufnahmefenster (61,62) für Energiespeicher (40) aufweist.

7. Ausgleichswelle nach Anspruch 5 oder 6, **dadurch gekennzeichnet, dass** der Flansch (30), bezogen auf die Ausgleichswelle (12), in axialer Richtung zwischen dem Unwuchtgewicht (17) und einer Gegenscheibe (35) angeordnet ist, die mit Hilfe von Abstandsbolzen (38, 49-51) an dem Unwuchtgewicht (17) befestigt ist.

8. Ausgleichswelle nach Anspruch 7, **dadurch gekennzeichnet, dass** zwischen dem Unwuchtgewicht (17) und dem Flansch (30) eine Zwischenscheibe (34) angeordnet ist, die Aufnahmekanäle (70,98) für die Energiespeicher (40) aufweist.

9. Ausgleichswelle nach Anspruch 8, **dadurch gekennzeichnet, dass** zwischen dem Unwuchtgewicht (17) und der Zwischenscheibe (34) eine Federscheibe (72) angeordnet ist.

10. Ausgleichswelle nach Anspruch 9, **dadurch gekennzeichnet, dass** sich die Federscheibe (72), der Flansch (30), die Zwischenscheibe (34) und die Gegenscheibe (35), bezogen auf die Drehachse der Ausgleichswelle (12), im Wesentlichen über den gleichen Kreissektor wie das Unwuchtgewicht (17) erstrecken.

11. Brennkraftmaschine mit mindestens einer von einer Kurbelwelle angetriebenen Ausgleichswelle (12) nach einem der vorhergehenden Ansprüche.

## Claims

1. Balancing shaft for an internal combustion engine, with at least one unbalance weight (17) and with a torsional-vibration damping device (32) having energy accumulators (40), **characterized in that** the unbalance weight is provided at one end of the balancing shaft, and the torsional-vibration damping device (32) is not designed rotationally symmetrically, but asymmetrically, such that the centre of gravity of the torsional-vibration damping device (32) is displaced radially in the direction of the unbalance of the unbalance weight (17), and such that the torsional-vibration damping device is integrated axially into the unbalance weight (17).

2. Balancing shaft according to Claim 1, **characterized in that** the torsional-vibration damping device (32) extends, with respect to the axis of rotation (13) of the balancing shaft (12), essentially over the same circle sector as the unbalance weight (17).

3. Balancing shaft according to one of the preceding claims, **characterized in that** the unbalance weight (17) has a bearing stub (21) which is connected fixedly in terms of rotation to the balancing shaft (12).

4. Balancing shaft according to Claim 3, **characterized in that** a torque transmission means (24), in particular a driving gearwheel, is mounted rotatably on the bearing stub (21).

5. Balancing shaft according to Claim 4, **characterized in that** the torque transmission means (24) is connected fixedly in terms of rotation to a flange (30).

6. Balancing shaft according to Claim 5, **characterized in that** the flange (30) has reception apertures (61, 62) for energy accumulators (40).

7. Balancing shaft according to Claim 5 or 6, **characterized in that** the flange (30) is arranged, with respect to the balancing shaft (12), in the axial direction between the unbalance weight (17) and a counterplate (35) which is fastened to the unbalance weight (17) with the aid of spacer bolts (38, 49-51).

8. Balancing shaft according to Claim 7, **characterized in that** an intermediate plate (34) which has reception channels (70, 98) for the energy accumulators (40) is arranged between the unbalance weight (17) and the flange (30).

9. Balancing shaft according to Claim 8, **characterized in that** a spring plate (72) is arranged between the unbalance weight (17) and the intermediate plate (34).

10. Balancing shaft according to Claim 9, **characterized in that** the spring plate (72), flange (30), intermediate plate (34) and counterplate (35) extend, with respect to the axis of rotation of the balancing shaft (12), essentially over the same circle sector as the unbalance weight (17).

11. Internal combustion engine with at least one balancing shaft (12) according to one of the preceding claims which is driven by a crankshaft.

## Revendications

1. Arbre d'équilibrage pour un moteur à combustion interne, avec au moins un poids non équilibré (17) et un dispositif d'amortissement des vibrations de torsion (32) avec des accumulateurs d'énergie (40), **caractérisé en ce que** le poids non équilibré est prévu à une extrémité de l'arbre d'équilibrage et le dispositif d'amortissement des vibrations de torsion (32) n'a pas la symétrie de rotation, mais il est asymétrique, de telle manière que le centre de gravité du dispositif d'amortissement des vibrations de torsion (32) soit déplacé radialement en direction du balourd du poids non équilibré (17) et que le dispositif d'amortissement des vibrations de torsion soit intégré axialement dans le poids non équilibré (17).

2. Arbre d'équilibrage selon la revendication 1, **caractérisé en ce que** le dispositif d'amortissement des vibrations de torsion (32) s'étend, par rapport à l'axe de rotation (13) de l'arbre d'équilibrage (12), essentiellement sur le même secteur circulaire que le poids non équilibré (17).

3. Arbre d'équilibrage selon l'une quelconque des revendications précédentes, **caractérisé en ce que** le poids non équilibré (17) présente un tronçon d'appui (21), qui est solidaire en rotation de l'arbre d'équilibrage (12).

4. Arbre d'équilibrage selon la revendication 3, **caractérisé en ce qu'**un moyen de transmission de couple de rotation (24), en particulier une roue dentée d'entraînement, est montée de façon rotative sur le tronçon d'appui (21).

5. Arbre d'équilibrage selon la revendication 4, **caractérisé en ce que** le moyen de transmission de couple de rotation (24) est solidaire en rotation d'une bride (30).

6. Arbre d'équilibrage selon la revendication 5, **caractérisé en ce que** la bride (30) présente des fenêtres de réception (61, 62) pour des accumulateurs d'énergie (40).

7. Arbre d'équilibrage selon la revendication 5 ou 6, **caractérisé en ce que** la bride (30), par rapport à l'arbre d'équilibrage (12), est disposée en direction axiale entre le poids non équilibré (17) et une rondelle opposée (35), qui est fixée sur le poids non équilibré (17) à l'aide de boulons d'écartement (38, 49-51).

8. Arbre d'équilibrage selon la revendication 7, **caractérisé en ce qu'**il se trouve, entre le poids non équilibré (17) et la bride (30), une rondelle intermédiaire (34), qui présente des canaux de réception (70, 98) pour les accumulateurs d'énergie (40).

9. Arbre d'équilibrage selon la revendication 8, **caractérisé en ce qu'**une rondelle élastique (72) est disposée entre le poids non équilibré (17) et la rondelle intermédiaire (34).

10. Arbre d'équilibrage selon la revendication 9, **caractérisé en ce que** la rondelle élastique (72), la bride (30), la rondelle intermédiaire (34) et la rondelle opposée (35) s'étendent, par rapport à l'axe de rotation de l'arbre d'équilibrage (12), essentiellement sur le même secteur circulaire que le poids non équilibré (17).

11. Moteur à combustion interne comportant au moins un arbre d'équilibrage (12) selon l'une quelconque des revendications précédentes, entraîné par un vilebrequin.
